# EUROPÄISCHE PATENTSCHRIFT

(11) **EP 1 026 481 B1**
(45) Veröffentlichungstag und Bekanntmachung des Hinweises auf die Patenterteilung: **16.03.2016**
(21) Anmeldenummer: 00101235.0
(22) Anmeldetag: 24.01.2000
(51) Int. Cl.: G01F 1/075, G01F 15/06, G01F 15/14

(54) **Kommunikationsfähiger Durchflusszähler für Flüssigkeiten, insbesondere Wasserzähler**
Communication capable flowrate counter for liquids, in particular water counter
Compteur du débit pour liquides capable de communication,en particulier compteur d' eau

(30) Priorität: 01.02.1999 DE 19903789
(43) Veröffentlichungstag der Anmeldung: 09.08.2000
(73) Patentinhaber: Diehl Metering GmbH, 91522 Ansbach (DE)
(72) Erfinder: Knepper, Markus, 91522 Ansbach (DE); Deuerling, Stefan, 91341 Röttenbach (DE); Stefke, Frank, 97258 Gollhofen (DE); Ibel, Karl-Heinz, 91522 Ansbach (DE); Geissler, Emil, 91555 Feuchtwangen (DE)
(74) Vertreter: Stippl, Hubert

(56) Entgegenhaltungen:
- EP-A1- 0 877 233
- WO-A-86/06529
- DE-A1- 4 442 193
- FR-A- 2 696 827
- US-A- 4 031 362

## Beschreibung

Die vorliegende Erfindung betrifft einen kommunikationsfähigen Durchflusszähler gemäß dem Oberbegriff des Anspruchs 1.

Ein Durchflusszähler gemäß dem Oberbegriff des Anspruchs 1 ist bereits aus der EP 0 877 233 A1 bekannt. Die Drehbewegung einer die Drehbewegung des Flügelrads übernehmenden Welle im Zählwerkgehäuse wird mittels eines Getriebes auf ein mechanisches Zählwerk übertragen. Ferner ist auf einem Ritzel des Getriebes ein mit unterschiedlichen Polungsbereichen versehener Magnetwürfel vorgesehen, dessen Drehbewegung von einem Reedkontakt ausgelesen wird.

Aus der Firmenbroschüre "PolluCom der Kompakte von SPX" ist ein Kompakt-Wärmezähler bekannt, bei dem das Wärmezählerrechenwerk beinhaltende Gehäuse eine Gehäuseabstufung aufweist, in die ein Zusatzgehäuse einsetzbar ist, welches ein elektro-mechanisches Zählwerk beinhaltet und mit einer Verbindungsleitung mit dem Gehäuse des Rechenwerks verbunden ist. Diese Ausgestaltung dient dazu, das in dem Zusatzgehäuse befindliche elektro-mechanische Zählwerk an einer Position zu befestigen, die gut ablesbar ist. Sofern eine Fernauslesung vorgenommen werden soll, soll dies über eine getrennte, anzusteckende Steckeinheit erfolgen.

Ferner ist ein fernauslesbarer Durchflusszähler aus der EP 0 468 236 A bekannt. Bei diesem Durchflusszähler sind die Ziffernrollen des Zählwerks unmittelbar mit einem umlaufenden Signalgeber verbunden, der mit einem Auslesesensor in einem Zusatzmodul optisch gekoppelt ist. Diese optische Koppelung erfolgt durch einen Klarsichteinsatz in der jeweiligen Wand des Gehäuses und des Zusatzmoduls.

WO 86/06529 A beschreibt eine Vorrichtung zur Umwandlung analoger Messgrößen in elektrische Signale, die in einen Gehäuseausgang eines kommunikationsfähigen Wasserzählers einsetzbar ist. Die Vorrichtung umfasst eine auf einen Rahmen fixierte Lichtquelle, eine Linse sowie eine Anordnung einzelner Photodioden.

Ein Durchflusszähler mit der Möglichkeit einer Fernauslesung ist ferner bereits aus der DE 44 28 996 C2 bekannt. Dieser Durchflusszähler besitzt einen mit der Zähleinrichtung zusammenwirkenden Sensor zur Abtastung einer an der mechanischen Zähleinrichtung vorgesehenen Markierung. Die vom Sensor erfassten Signale werden über eine Sendeeinrichtung funktechnisch an ein zentrales, entfernt angeordnetes Empfangssystem übertragen. Die mechanische Zähleinrichtung, die Markierung, der Sensor sowie die funktechnische Sendeeinrichtung befinden sich in einem gemeinsamen Gehäuse, welches an der Oberseite des ein Flügelrad zur Volumen- und/oder Mengenmessung beinhaltenden Gehäuses aufgesetzt ist. Die Abschirmung vor möglichen Manipulationen erfolgt durch die Verwendung einer über das Zählwerkgehäuse gesetzten Abschirmhaube.

Weiterhin ist aus der DE 196 20 007 A1 ein Durchlaufmengenmesser bekannt, bei dem in einem ebenfalls an der Oberseite eines ein Flügelrad beinhaltenden Gehäuses ein weiteres Gehäuse aufgesetzt ist, in dem sich das Zählwerk einschließlich der Zählimpulsabtastung befindet. Zur Vermeidung einer Manipulation des Zählwerks ist innerhalb des Zählwerkgehäuses ein elektrisches Steuerelement vorgesehen, welches auf ein von außen erzeugtes, überlagertes magnetisches Fremdfeld anspricht und die Einwirkung eines magnetischen Fremdfelds am Anzeigeelement aufzeigt. Soll eine Signalabtastung und Weiterleitung, d.h. eine Kommunikation mit einer entfernten Zentrale vorgenommen werden, ist es erforderlich, ein auf das Zählwerkgehäuse aufzusetzendes Zusatzgerät zur Signalabtastung und Weiterleitung einzusetzen, wodurch eine erhebliche Vergrößerung des Bauteilvolumens und insgesamt ein schwierigerer Einbau in ein vorhandenes Leitungssystem begründet wird.

Aus der DE 44 42 193 A1 ist ein elektronisches Zählwerkmodul für einen Wasserzähler bekannt, bei dem ein scheibenförmiges Geberelement zum Einsatz kommt. Dieses ist als umlaufender Zahnrad-Magnet ausgebildet und läuft unter einer Anordnung mehrerer Magnetschalter, die jeweils um 90° versetzt zueinander positioniert sind. Die von den Magnetschaltern erzeugte Impulse werden von einem Mikroprozessor verarbeitet und an einer Flüssigkristallanzeige angezeigt.

Die Aufgabe der vorliegenden Erfindung besteht darin, einen neuartigen, kommunikationsfähigen Durchflusszähler zur Verfügung zu stellen, welcher vergleichsweise geringe Abmessungen aufweist, die Möglichkeit einer Abtastung und Weitergabe der abgetasteten Daten an eine zentrale Datensammelstelle sowie eine wirksame Reduzierung der Manipulationsanfälligkeit im Abtastbereich ohne hierfür zusätzlich erforderliche Bauteile gewährleistet.

Diese Aufgabe wird beim gattungsgemäßen Durchflusszähler durch die kennzeichnenden Merkmale des Anspruchs 1 gelöst.Das Zählwerkgehäuse weist eine Gehäuseaussparung in Form einer Gehäuseabstufung auf, in welche ein in einem separaten Gehäuse untergebrachtes Abtastmodul einsetzbar oder ansetzbar ist. Die Gehäuseabstufung bewirkt, dass der Durchflusszähler im Falle einer gewünschten Abtastung durch das in der Gehäuseaussparung unterzubringende Abtastmodul hinsichtlich seiner Einbaugröße nicht wesentlich oder zumindest nicht übermäßig vergrößert wird. Hierdurch kann die Möglichkeit geschaffen werden, bis auf den Einsatz des Abtastmoduls ohne Änderung der baulichen Gegebenheiten eine nachträgliche Umrüstung auf ein System mit Fernauslesung im Bedarfsfall vorzunehmen. Gleichermaßen kann es zur Gewährleistung eines besonders kompakten Aufbaus zweckmäßig sein, die Achse des Geberelements zusätzlich seitlich versetzt zur Achse des umlaufenden Flügelrads des Turbinenrads des Untergehäuses zu positionieren. Um die Drehbewegungen des umlaufenden Flügelrads bzw. Turbinenrads oder einer diese Bewegung übernehmenden Welle im Zählwerkgehäuse auf das Geberelement und/oder auf eine Welle des mechanischen Zählwerks zu übertragen, ist erfindungsgemäß ein Getriebe, insbesondere Zahnradgetriebe vorgesehen. Hierdurch wird eine besonders kompakte Bauweise erzielt und gleichzeitig die Möglichkeit der konstruktiven Realisierung einer Gehäuseabstufung erleichtert. Die Abtastung erfolgt erfindungsgemäß über ein scheibenförmiges Geberelement, welches sich an der Oberseite der Gehäuseabstufung befindet und sich in Abhängigkeit der Drehung des im Untergehäuse befindlichen Flügelrads bewegt.

Zweckmäßigerweise wird gemäß einer Ausgestaltung der Erfindung die Gehäuseaussparung in Form einer Abstufung realisiert, in welche ein der Gehäuseabstufung entsprechend dimensioniertes Abtastmodul einsetzbar ist oder an welche ein solches Abtastmodul ansetzbar ist.

Das Abtastmodulgehäuse ist zweckmäßigerweise derart ausgebildet, dass es in dem in die Gehäuseabstufung eingesetzten Zustand die Kontur des Zählwerkgehäuses komplettiert, beispielsweise in Form eines die Zylinderform komplettierenden Zylindersabschnitts.

Die besondere Ausgestaltung der Erfindung ist darin gekennzeichnet, dass das Abtastgehäuse ebenfalls eine Gehäuseabstufung aufweist und Zählwerkgehäuse sowie Abtastgehäuse unter Anlage der beiden Gehäuseabstufungen zusammengesetzt werden.

Die Gehäuseabstufung des Abtastgehäuses entspricht zweckmäßigerweise hinsichtlich ihrer Höhe im wesentlichen der Gehäuseabstufung des Zählwerkgehäuses.

Die Höhe der jeweiligen Abstufung des Zählwerkgehäuses und/oder Abtastmodulgehäuses liegt zweckmäßigerweise im Bereich des 0,2 - 0,8fachen, vorzugsweise des 0,3 - 0,7fachen der Höhe des Durchflusszählers.

Für den Fall, dass eine Fernauslese nicht erwünscht ist, ist erfindungsgemäß anstelle des Abtastmoduls ein entsprechend geformtes Gehäuseblindelement in die Gehäuseabstufung einsetzbar. Das Gehäuseblindelement besitzt die äußere Form des Abtastmoduls und komplettiert das Zählwerkgehäuse in entsprechender Weise.

Die Abtastung erfolgt zweckmäßigerweise im Grenzbereich des Bodens des Abtastmoduls am Grund der Gehäuseabstufung, und zwar insbesondere in einem gemeinsamen mittleren Raum B des durch das Zählwerkgehäuse sowie Abtastmodulgehäuse definierten Raums. Dieser mittlere Raum B, in dem die Abtastung der Signale aus dem Zählwerkgehäuse erfolgt, ist von dem Zählwerkgehäuse einschließlich der darin befindlichen Baugruppen einerseits sowie vom Abtastmodul bzw. Gehäuseblindelement andererseits umgeben und daher aufgrund dieser konstruktiven Besonderheit vor Manipulationen besonders sicher.

Zweckmäßigerweise verläuft die Gehäuseabstufung über die Mittellinie M des Zählwerkgehäuses bzw. des darunter befindlichen Untergehäuses hinweg, wodurch die für die Abtastung relevanten Bauteile in einfacher Weise im vor Manipulation gesicherten mittleren Raum B positioniert werden können.

Das Geberelement trägt in üblicher Weise abtastbare, insbesondere dauermagnetische Markierungen.

Zur Gewährleistung eines besonders kompakten Aufbaus der in dem Zählergehäuse verbleibenden Bauteile ist es zweckmäßig, die Achse des Geberelements seitlich versetzt zur Achse beispielsweise des mechanischen Zählwerks zu positionieren.

Das Abtastmodul beinhaltet zweckmäßigerweise eine Sensoreinrichtung zur Abtastung der Signale vom Geberelement beispielsweise in Form eines oder eine Mehrzahl von Reedschaltern, ein Steuerelement beispielsweise in Form eines Mikroprozessors sowie eine Einrichtung zur Datenausgabe bzw. Datenübertragung. Letztere kann z.B. eine Funkeinrichtung, ein M-Busanschluss sowie eine optoelektronische Datenübergabeeinrichtung oder eine Kombination davon sein.

Um die Entfernung des Abtastmoduls bzw. des Gehäuseblindelements aus der Gehäuseabstufung und dadurch mögliche Manipulationen zu verhindern, ist das Abtastmodul bzw. Gehäuseblindelement über eine verplombbare mechanische Verbindungseinrichtung, beispielsweise eine mit einer Verplombung zur Außenseite hin verschließbare Verschraubung mit dem Zählwerkgehäuse verbindbar.

Ausgestaltungen zum technologischen Hintergrund sowie der vorliegenden Erfindung werden nachstehend anhand von Zeichnungsfiguren näher erläutert. Übereinstimmende Merkmale unterschiedlicher Figuren bzw. Ausführungsformen sind mit gleichen Bezugsziffern versehen. Es zeigen:
- Fig. 1:: eine stark vereinfachte schematische Darstellung eines Durchflusszählers bei frei zugänglicher Gehäuseabstufung in seitlicher Schnittdarstellung unter Verwendung eines elektronischen Anzeigeelements zur Erklärung des technologischen Hintergrunds;
- Fig. 2:: den Durchflusszähler gemäß Fig. 1 mit eingesetztem Abtastmodul in seitlicher Schnittdarstellung;
- Fig. 3:: den Durchflusszähler mit eingesetzten Abtastmodul gemäß Fig. 2 in Draufsicht;
- Fig. 4:: eine erste Ausgestaltung des erfindungsgemäßen Durchflusszählers unter Verwendung eines mechanischen Zählwerks in seitlicher Schnittdarstellung sowie
- Fig. 5:: eine weitere Ausgestaltung des erfindungsgemäßen Durchflusszählers mit Abstufung sowohl im Zählwerkgehäuse als auch im Abtastmodulgehäuse.

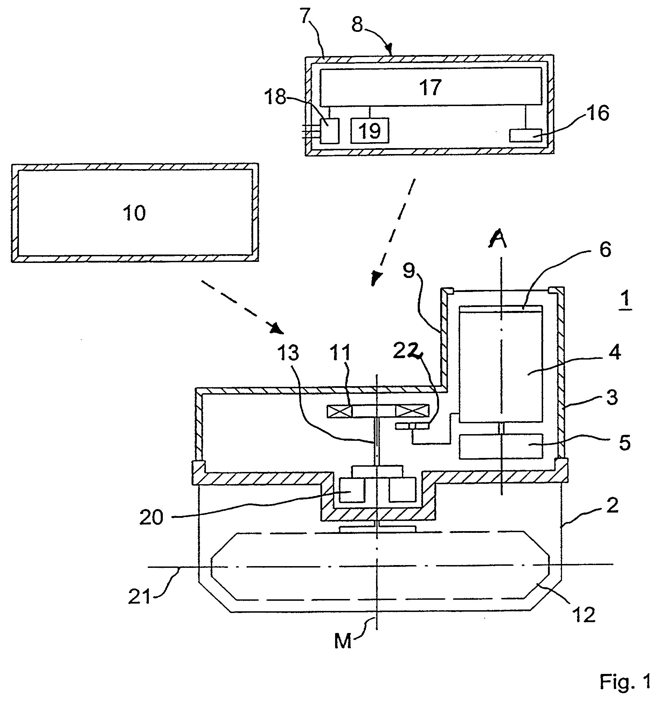

Bezugsziff. 1 in Fig. 1 bezeichnet den Durchflusszähler in seiner Gesamtheit. Er umfasst ein Untergehäuse 2, welches über (nicht dargestellte) Anschlüsse mit einem Rohrleitungssystem 21 verbunden ist. Innerhalb des Untergehäuses 2 befindet sich eine Einrichtung zur Erfassung der Durchflussgeschwindigkeit bzw. Durchflussmenge beispielsweise in Form eines Flügelrads 12 oder dgl..

An der Oberseite des Untergehäuses 2 schließt sich ein Zählwerkgehäuse 3 an, in dem unter Zuhilfenahme eines Drehbewegungsaufnehmers 20 die Drehbewegung des Flügels 12 über eine Welle 13 auf ein Geberelement 11 übertragen wird. Das Geberelement 11 besitzt Scheibenform und trägt dauermagnetische Markierungen.

Um eine Anzeige der erfassten Volumenmenge unmittelbar am Zählwerkgehäuse 3 zu gewährleisten, wird die Drehung des Geberelements 11 von dem Aufnahmeelement 22 abgegriffen und dem Zählwerk 4, welches durch eine Energiequelle 5 gespeist wird, übertragen und ausgewertet. An der Oberseite des Zählwerks 4 befindet sich ein elektronisches Anzeigeelement 6 zur optischen Ausgabe der erfassten Durchflussmenge, welches von der Energiequelle 5 gespeist wird.

Das Zählwerkgehäuse 3 weist eine Gehäuseabstufung 9 auf, die bei der Ausgestaltung des Durchflusszählers gemäß Fig. 1 über die Mittellinie M verläuft. An der Oberseite der Gehäuseabstufung 9 ist das Geberelement 11 angeordnet. Die Drehachse der Welle 13 des Geberelements 11 liegt versetzt zur Anordnung des Zählwerks 4 (Drehachse A).

In einem separaten Abtastmodulgehäuse 7 befinden sich die einzelnen Bauelemente zur Abtastung der Drehbewegung des Geberelements 11, nämlich eine Sensoreinrichtung 16 z.B. ein Reedschalter, ein Steuerelement 17 z.B. ein Mikroprozessor) sowie eine Datenausgabeeinrichtung 18, z.B. eine Funkeinrichtung, ein M-Busanschluss oder eine optoelektronische Datenübergabeeinrichtung oder eine Kombination davon. Bei einer funktechnischen oder optoelektronischen Datenübertragung beinhaltet das Abtastmodul zudem eine Energiequelle 19.

Das Abtastmodulgehäuse 7 entspricht in seiner Form und Abmessung der Gehäuseabstufung 9, so dass bei eingesetztem Abtastmodulgehäuse 7 die Form und Kontur des Durchflusszählers 1 komplettiert wird.

Sofern eine Abtastung nicht erwünscht ist, ist ein entsprechend der Form des Abtastmodulgehäuses 7 dimensioniertes Gehäuseblindelement 10 zur Komplettierung des Durchflusszählers 1 vorgesehen.

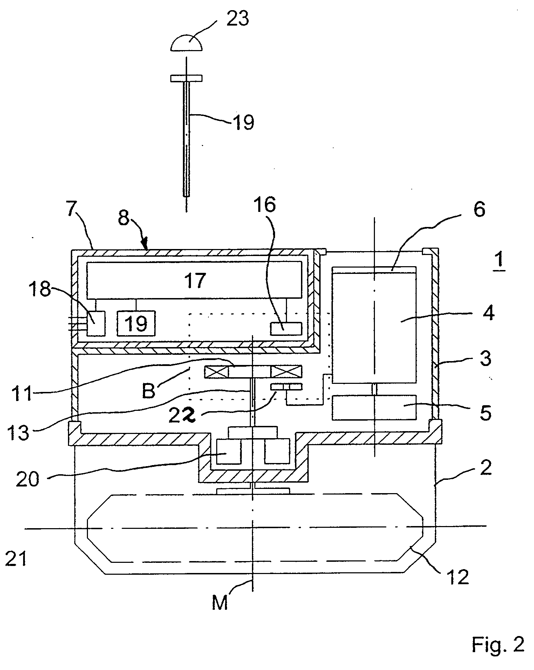

Fig. 2 zeigt den Durchflusszähler 1 in zusammengesetztem Zustand, so wie er zur Fernauslesung der erfassten Daten Verwendung findet. Aus Fig. 2 wird erkennbar, dass sich das Geberelement 11 in einem durch die umliegenden Bauteile, einschließlich Abtastmodul 8 geschützten mittleren Raum B befindet und daher vor von außen erfolgenden Manipulationsversuchen unter Verwendung von Dauermagneten sicher ist.

Zur Verbindung von Abtastmodul 8 sowie Zählwerkgehäuse 3 ist eine in Fig. 2 lediglich prinzipiell angedeutete Verschraubung 19 vorgesehen, welche zur Vermeidung von Manipulationen mit einer Verplombeinrichtung 23 versehen werden kann.

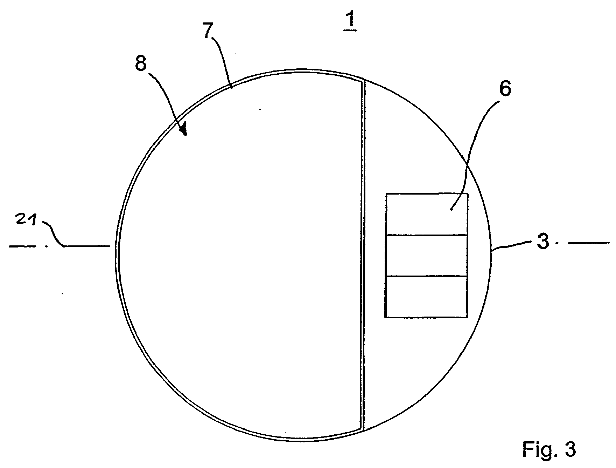

Die Darstellung gemäß Fig. 3 zeigt den zusammengesetzten Durchflusszähler 1 gemäß Fig. 2 in Draufsicht. Es wird deutlich, dass das Abtastmodul 8 die äußere Kontur des Durchflusszählers 1 lediglich komplettiert. Jedoch nicht vergrößert.

Ist es im Bedarfsfall gewünscht, auf eine Fernablesung überzugehen, muss lediglich das Gehäuseblindelement 10 durch das Abtastmodul 8 ersetzt werden, ohne dass sich hierbei die Größe des Durchflusszählers 1 ändert.

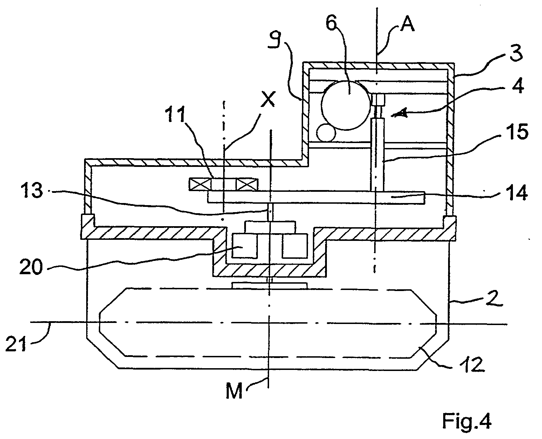

Fig. 4 zeigt eine erste Ausgestaltung des erfindungsgemäßen Durchflusszählers 1, bei dem ein mechanisches Anzeigeelement 6 des Zählwerks 4 zum Einsatz kommt.

Zur Ermöglichung einer möglichst kompakten Bauweise bei gleichzeitig vorgesehener Gehäuseabstufung 9 wird die Drehbewegung der Welle 13 des Drehbewegungsaufnehmers 20 über ein Getriebe, insbesondere Zahnradgetriebe 14 auf das Geberelement 11 sowie die Welle 15 des mechanischen Zählwerks 4 übertragen.

Die Achse X des Geberelements 11 ist damit einerseits seitlich versetzt zur Mittellinie M des Durchflusszählers 1 sowie desweiteren seitlich versetzt zur Drehachse A des mechanischen Zählwerks 4.

Der Durchflusszähler 1 gemäß Fig. 4 wird in entsprechender Weise durch ein in Fig. 4 nicht dargestelltes Abtastmodul bzw. Gehäuseblindelement der beschriebenen Art komplettiert.

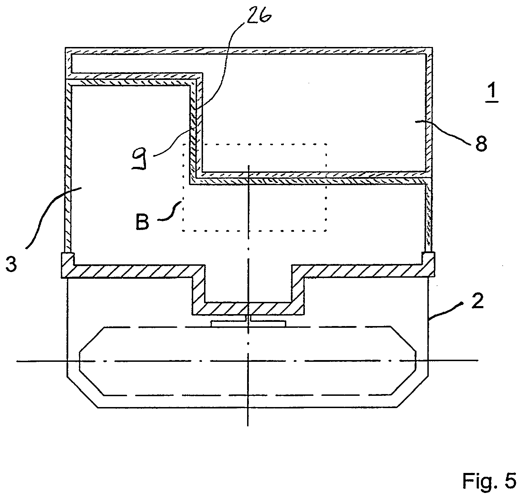

Die Ausgestaltung gemäß Fig. 5 der vorliegenden Anmeldung ist darin gekennzeichnet, dass sowohl das Zählwerkgehäuse 3 als auch das Abtastmodul 8 jeweils eine stufenförmige Ausnehmung aufweisen und zu einem kompletten, abtastfähigen Durchflusszähler 1 zusammengesetzt werden können. Die strichlierte Linie bezeichnet wiederum den mittleren Raum B, welcher konstruktionsgemäß vor Manipulationen sicher ist. Durch das stufenförmige Abtastmodul 8 vergrößert sich zwar die Gesamtanordnung des Durchflusszählers 1 etwas dies allerdings vergleichsweise geringfügiger als beim Stand der Technik. Die Stufenform des Zählergehäuses 3 wird hier ebenso wie bei den vorstehenden Ausgestaltungen durch das Abtastmodul zu einem zylinderförmigen Teil komplettiert. Der innere Aufbau des Durchflusszählers 1 entspricht ansonsten den vorstehend beschriebenen Ausgestaltungen. Die Höhe der Gehäuseabstufung 9 bzw. 26 liegt im Bereich des 0,2 - 0,8fachen, vorzugsweise im Bereich des 0,3 - 0,7fachen der Höhe des Durchflusszählers 1.

Die Erfindung ermöglicht es, den Durchflusszähler 1 im Falle einer gewünschten Abtastung durch das in die Gehäuseabstufung 9 einzusetzende Abtastmodul 8 in einfacher Weise von Normalbetrieb auf Abtastbetrieb umzustellen, ohne hierbei die Einbaugröße des Durchflusszählers 1 zu verändern.

Darüber hinaus wird durch die Unterbringung des Geberelements 11 im oberen Teil der Gehäuseabstufung 9 und der hierdurch das Geberelement 11 im zusammengesetzten Zustand des Durchflusszählers 1 umgebenden Bauteile ein sicherer Schutz vor Manipulationen gewährleistet. Die Erfindung stellt daher einen erheblichen Beitrag zur Verbesserung kommunikationsfähiger Durchflusszähler 1 dar.

### BEZUGSZEICHEN

- 1: Durchflusszähler
- 2: Untergehäuse
- 3: Zählwerkgehäuse
- 4: Zählwerk
- 5: Energiequelle
- 6: Anzeigeelement
- 7: Abtastmodulgehäuse
- 8: Abtastmodul
- 9: Gehäuseabstufung
- 10: Gehäuseblindelement
- 11: Geberelement
- 12: Flügelrad
- 13: Welle
- 14: Zahnradgetriebe
- 15: Zählwerkwelle
- 16: Sensoreinrichtung
- 17: Steuerelement
- 18: Datenausgabe
- 19: Verschraubung
- 20: Drehbewegungsaufnehmer
- 21: Rohrleitungssystem
- 22: Aufnahmeelement
- 23: Verplombeinrichtung
- 26: Gehäuseabstufung
- A: Drehachse
- B: mittlerer Raum
- M: Mittellinie
- X: Achse (Geberelement)

## Patentansprüche

1. Kommunikationsfähiger Durchflußzähler für Flüssigkeiten, insbesondere Wasserzähler, mit
einem mit der Rohrleitung (21) verbindbaren Untergehäuse (2), in dem sich ein rotierendes Flügelrad (12) befindet,
einem Zählwerkgehäuse (3) mit einem mechanischen Zählwerk (4) mit einer Welle (15), die die Drehbewegung des Flügelrads (12) oder einer die Drehbewegung des Flügelrads (12) übernehmenden Welle (13) auf eine Welle des Zählwerks (4) überträgt sowie gegebenenfalls einem Anzeigeelement (6),
einem Abtastmodul (8), welches zur funktechnischen oder optoelektronischen Datenübertragung
eine Sensoreinrichtung (16) zur Abtastung eines Geberelements (11), welches um eine Rotationsachse X rotiert,
ein Steuerelement (17),
eine Energiequelle (19) sowie
eine Einrichtung zur Datenausgabe (18)
aufweist, wobei
die Sensoreinrichtung (16) im Abtastmodul (8) dem Geberelement (11) gegenüberliegend angeordnet ist,
die Rotationsachse X des Geberelements (11) mit der Welle des Flügelrads (12) fluchtet oder seitlich parallel zur Welle des Flügelrads (12) versetzt liegt,
ein Getriebe, insbesondere Zahnradgetriebe (14) vorgesehen ist und
die Drehbewegung des umlaufenden Flügelrads (12) oder der diese Drehbewegung übernehmenden Welle (13) über das Zahnradgetriebe (14) auf das Geberelement (11) und auf die Welle (15) übertragbar ist.
**dadurch gekennzeichnet, daß**
sich das Abtastmodul (8) in einem separaten, außerhalb des Zählwerkgehäuses (3) befindlichen Zusatzgehäuse (7) befindet,
das Zählwerkgehäuse (3) mit dem Zusatzgehäuse (7) eine Einheit bildet,
das Zählwerkgehäuse (3) eine Gehäuseaussparung aufweist,
als Gehäuseaussparung eine Gehäuseabstufung (9) vorgesehen ist, in die das separate Zusatzgehäuse (7) des Abtastmoduls (8) als solches einsetzbar ist,
das Geberelement (11) scheibenförmig ist und sich im Zählwerkgehäuse (3) im Bereich der Gehäuseabstufung (9) befindet,

2. Durchflußzähler nach Anspruch 1,
**dadurch gekennzeichnet, daß**
das Abtastmodulgehäuse (7) der Form der Gehäuseabstufung (9) im Wesentlichen entspricht.

3. Durchflußzähler nach einem der vorhergehenden Ansprüche,
**dadurch gekennzeichnet, daß**
das Abtastmodulgehäuse (7) bei in die Gehäuseabstufung (9) eingesetztem Zustand die Kontur des Zählwerkgehäuses (3) komplettiert.

4. Durchflußzähler nach einem der vorhergehenden Ansprüche,
**dadurch gekennzeichnet, daß**
anstelle des Abtastmoduls (8) ein entsprechend geformtes Gehäuseblindelement (10) in die Gehäuseabstufung (9) einsetzbar ist.

5. Durchflußzähler nach einem der vorhergehenden Ansprüche,
**dadurch gekennzeichnet, daß**
sich die Abtastung in einem gemeinsamen mittleren Raum B des Zählwerkgehäuses (3) sowie Abtastmodulgehäuses (7) befindet.

6. Durchflußzähler nach einem der vorhergehenden Ansprüche,
**dadurch gekennzeichnet, daß**
die Gehäuseabstufung (9) über die Mittellinie M des Zählwerkgehäuses (3) hinweg verläuft.

7. Durchflußzähler nach einem der vorhergehenden Ansprüche,
**dadurch gekennzeichnet, daß**
das Abtastmodul (8) bzw. das Gehäuseblindelement (10) über eine verplombbare mechanische Verbindungseinrichtung, insbesondere Verschraubung (19) mit dem Zählwerkgehäuse (3) verbindbar ist.

## Claims

1. Communication-capable flowmeter for liquids, in particular a water meter, comprising
a sub-housing (2) which can be connected to the pipeline (21) and in which there is a rotating impeller (12),
a meter mechanism housing (3) having a mechanical meter mechanism (4) with a shaft (15) which transmits the rotational movement of the impeller (12) or a shaft (13) receiving the rotational movement of the impeller (12) to a shaft of the meter mechanism (4) and, if appropriate, a display element (6),
a sensing module (8), which for data transmission via radio or optoelectronic means, has
a sensor device (16) for sensing a transmitter element (11) which rotates about an axis of rotation X,
a control element (17),
an energy source (19) and
a data output device (18),
the sensor device (16) being arranged in the sensing module (8), opposite the transmitter element (11),
the axis of rotation X of the transmitter element (11) being aligned with the shaft of the impeller (12) or being located offset laterally parallel to the shaft of the impeller (12),
a gearbox, in particular a toothed gear mechanism (14) being provided and
the rotational movement of the revolving impeller (12) or the shaft (13) receiving this rotational movement being transmissible via the toothed gear mechanism (14) to the transmitter element (11) and to the shaft (15),
**characterized in that**
the sensing module (8) is located in a separate additional housing (7), located outside the meter mechanism housing (3),
the meter mechanism housing (3) forms a unit with the additional housing (7),
the meter mechanism housing (3) has a housing recess,
the housing recess provided is a housing step (9), into which the separate additional housing (7) of the sensing module (8) as such can be inserted,
the transmitter element (11) is disc-shaped and is located in the meter mechanism housing (3) in the area of the housing step (9).

2. Flowmeter according to Claim 1,
**characterized in that**
the sensing module housing (7) corresponds substantially to the shape of the housing step (9).

3. Flowmeter according to one of the preceding claims,
**characterized in that**
the sensing module housing (7) completes the contour of the meter mechanism housing (3) when inserted into the housing step (9).

4. Flowmeter according to one of the preceding claims,
**characterized in that**
instead of the sensing module (8), a correspondingly shaped housing blanking element (10) can be inserted into the housing step (9).

5. Flowmeter according to one of the preceding claims,
**characterized in that**
the sensing takes place in a common central chamber B of the meter mechanism housing (3) and sensing module housing (7).

6. Flowmeter according to one of the preceding claims,
**characterized in that**
the housing step (9) extends beyond the centre line M of the meter mechanism housing (3).

7. Flowmeter according to one of the preceding claims,
**characterized in that**
the sensing module (8) or the housing blanking element (10) can be connected to the meter mechanism housing (3) via a mechanical connecting device that can be sealed, in particular a screw fixing (19).

## Revendications

1. Compteur de débit à capacité de communication, notamment, compteur d'eau, comprenant
un sous-boîtier (2), dans lequel se trouve une roue à aubes en rotation (12), pouvant être relié à la conduite (21),
un boîtier pour mécanisme de comptage (3) comprenant un mécanisme de comptage mécanique (4) muni d'un arbre (15) qui transmet le mouvement de rotation de la roue à aubes (12) ou d'un arbre (13) reprenant le mouvement de rotation de la roue à aubes (12) à un arbre du mécanisme de comptage (4) et, le cas échéant, un élément d'affichage (6),
un module d'échantillonnage (8) qui comprend, pour la transmission de données par voie radio ou optoélectronique,
un dispositif à capteur (16) destiné à échantillonner un élément détecteur (11) qui est en rotation autour d'un axe de rotation X,
un élément de commande (17),
une source d'énergie (19), et
un dispositif de fourniture de données (18), dans lequel
le dispositif à capteur (16) est disposé dans un module d'échantillonnage (8) de l'élément détecteur (11) de manière opposée à celui-ci,
l'axe de rotation X de l'élément détecteur (11) est aligné avec l'arbre de la roue à aubes (12) ou est décalé latéralement parallèlement à l'arbre de la roue à aubes (12),
il est prévu une transmission, notamment une transmission à engrenages (14) et
le mouvement de rotation de la roue à aubes en rotation (12) ou de l'arbre (13) reprenant le mouvement de rotation de cette dernière peut être transmis par l'intermédiaire de la transmission à engrenages (14) à l'élément détecteur (11) et à l'arbre (15),
**caractérisé en ce que**
le module d'échantillonnage (8) se trouve dans un boîtier supplémentaire (7) séparé se trouvant à l'extérieur du boîtier pour mécanisme de comptage (3), le boîtier pour mécanisme de comptage (3) forme une unité avec le boîtier supplémentaire (7),
le boîtier pour mécanisme de comptage (3) présente un évidement de boîtier,
il est prévu en tant qu'évidement de boîtier un étagement de boîtier (9) dans lequel le boîtier supplémentaire séparé (7) du module d'échantillonnage (8) peut être inséré tel quel,
l'élément détecteur (11) présente la forme d'un disque et se trouve dans le boîtier pour mécanisme de comptage (3) dans la région de l'étagement de boîtier (9).

2. Compteur de débit selon la revendication 1, **caractérisé en ce que** le boîtier pour module d'échantillonnage (7) correspond sensiblement à la forme de l'étagement de boîtier (9).

3. Compteur de débit selon l'une quelconque des revendications précédentes, **caractérisé en ce que** le boîtier pour module d'échantillonnage (7), lorsqu'il est dans l'état inséré dans l'étagement de boîtier (9), complète le contour de boîtier pour mécanisme de comptage (3).

4. Compteur de débit selon l'une quelconque des revendications précédentes, **caractérisé en ce qu'**au lieu du module d'échantillonnage (8), un élément aveugle de boîtier (10) façonné de manière correspondante peut être inséré dans l'étagement de boîtier (9).

5. Compteur de débit selon l'une quelconque des revendications précédentes, **caractérisé en ce que** l'échantillonnage s'effectue dans un espace B central commun du boîtier pour mécanisme de comptage (3) et du boîtier pour module d'échantillonnage (7).

6. Compteur de débit selon l'une quelconque des revendications précédentes, **caractérisé en ce que** l'étagement de boîtier (9) passe par la ligne médiane M du boîtier pour mécanisme de comptage (3).

7. Compteur de débit selon l'une quelconque des revendications précédentes, **caractérisé en ce que** le module d'échantillonnage (8) ou l'élément aveugle de boîtier (10) peut être relié par l'intermédiaire d'un dispositif de raccordement mécanique pouvant être plombé, notamment par l'intermédiaire d'un raccord à vis (19), au boîtier pour mécanisme de comptage (3).
